# EUROPÄISCHE PATENTANMELDUNG

(11) **EP 2 933 513 A1**
(43) Veröffentlichungstag der Anmeldung: **21.10.2015**
(21) Anmeldenummer: 14164721.4
(22) Anmeldetag: 15.04.2014
(51) Int. Cl.: F16D 1/033

(54) **Kupplungsvorrichtung zur Anbindung einer Schaltkupplung an einen Turbinenstrang**

(71) Anmelder: Siemens Aktiengesellschaft, 80333 München (DE)
(72) Erfinder: Lacombe, Bernd, 46348 Raesfeld-Erle (DE); Myschi, Oliver, 47137 Duisburg (DE); Pieper, Daniel, 45529 Hattingen (DE)

(57) **Zusammenfassung**

Die Erfindung betrifft eine Kupplungsvorrichtung zur Anbindung einer Schaltkupplung (10) an einen Turbinenstrang, einen Turbinenstrang mit einer Schaltkupplung sowie ein Verfahren zur Anbindung einer Schaltkupplung an einen Generator und an eine Turbine. Die Kupplungsvorrichtung zur Anbindung der Schaltkupplung (10) umfasst ein ersten Kupplungsflansch (20) und einen zweiten Kupplungsflansch (30), wobei der erste Kupplungsflansch (20) und der zweite Kupplungsflansch (30) je mindestens eine Bohrung (21,31) zur Aufnahme eines Kupplungsbolzens (12) aufweisen. Der erste Kupplungsflansch (20) und der zweite Kupplungsflansch (30) sind über mindestens einen Kupplungsbolzen (12) zueinander zentriert, welcher in die Bohrungen (21,31) im ersten und im zweiten Kupplungsflansch (20,30) eingesetzt ist.

## Beschreibung

Die vorliegende Erfindung betrifft eine Kupplungsvorrichtung zur Anbindung einer Schaltkupplung an einen Turbinenstrang, einen Turbinenstrang mit einer Schaltkupplung sowie ein Verfahren zur Anbindung einer Schaltkupplung an einen Generator und an eine Turbine.

Zur Ankuppelung einer Dampfturbine an einen Generators mit einer Gasturbine in einer Einwellenanlage wird eine Schaltkupplung verwendet, mit der die Dampfturbine direkt oder indirekt mittels einer Zwischenwelle, während des Betriebs an den Generator mit der verbundenen Gasturbine angekuppelt werden kann. Eine solche Schaltkupplung ist aus dem Stand der Technik bekannt. Bei Schaltkupplungen dieser Art werden die Kupplungsflansche von Generator bzw. Turbine getrennt von den Flanschen der Schaltkupplung bearbeitet, da die Schaltkupplungen austauschbar sein sollen und beim Bearbeitungsvorgang, beispielsweise bei einem gemeinsamen Honen, sonst Späne in die Schaltkupplung gelangen. Aus diesem Grund werden bei den bekannten Schaltkupplungen massive Kupplungsbolzen mit einem relativ großen Spiel eingebaut, um die Montierbarkeit bei allen möglichen Toleranzen der Lage und Größe der Kupplungsbohrungen gewährleisten zu können. Die Zentrierung dieser Schaltkupplungen erfolgt über einen sogenannten Rezess, welcher mit Übergangspassung in die Kupplungsverbindung eingesetzt wird, während die Kupplungsbolzen keinen Einfluss auf die Zentrierung haben. Dadurch weist die Kupplungsverbindung zur Schaltkupplung ein gewisses Spiel auf und der Rundlauf des Turbinenstrangs ist nicht reproduzierbar und negativ beeinflusst.

Da die innenliegende Seite des Kupplungsflansches der Schaltkupplung in der Regel nicht zugänglich ist, können heute keine durchgehenden Kupplungsbolzen verwendet werden, die eine axiale Verspannung mit einer beidseitigen Fixierung ermöglichen würde.

Aufgabe der Erfindung ist es, eine Kupplungsvorrichtung für die Anbindung an eine Schaltkupplung bereitzustellen, bei der trotz einseitiger Zugänglichkeit der Kupplungsflansche diese sicher und reproduzierbar zueinander fixiert werden, wobei die angekuppelte Schaltkupplung austauschbar bleibt und es keiner aufwendigen, gemeinsamen Bearbeitung bedarf.

Die erfindungsgemäße Kupplungsvorrichtung zur Anbindung der Schaltkupplung mit den Merkmalen des Anspruchs 1 bietet gegenüber den aus dem Stand der Technik bekannten Kupplungselementen den Vorteil, dass die Zentrierung der Kupplungsflansche über mindestens ein Verbindungselement erfolgt, welcher in die Bohrungen im Kupplungsflansch und in die Bohrung im Kupplungsflansch der Schaltkupplung eingesetzt ist. Dadurch kann eine reproduzierbare Fixierung und damit eine höhere Rundlaufgenauigkeit und eine bessere Auswuchtgüte erreicht werden.

Durch die in den abhängigen Ansprüchen angeführten Maßnahmen sind vorteilhafte Weiterbildungen und Verbesserungen der im unabhängigen Anspruch angegebenen Kupplungsvorrichtung möglich.

Eine vorteilhafte Weiterbildung besteht darin, dass an dem turbinen- oder generatorseitigen Kupplungsflansch ein axialer Anschlag zur Positionierung des Verbindungselements ausgebildet ist. Dadurch lässt sich die Position des Bolzens, insbesondere bei der Montage, gegenüber den beiden Kupplungsflanschen auf einfache und reproduzierbare Art sicherstellen, ohne dass es einer axialen Verschraubung bedarf. Besonders vorteilhaft ist dabei, wenn der axiale Anschlag in eine Bohrung im Kupplungsflansch, beispielsweise als gestufte Bohrung, integriert ist, so dass keine zusätzliche Bearbeitung eines der beiden Kupplungsflansche notwendig ist.

Eine weitere vorteilhafte Weiterbildung besteht darin, dass das Verbindungselement als Spreizbolzen mit einem internen Spreizmechanismus ausgeführt ist. Durch eine Ausgestaltung als Spreizbolzen kann das Verbindungselement sowohl für die Zentrierung der beiden Kupplungsflansche zueinander, als auch für eine spielfreie und formschlüssige Verbindung zur Drehmomentübertragung genutzt werden. Um einen optimalen Formschluss zwischen Spreizbolzen und Kupplungsflansch zu realisieren, ist es vorteilhaft, dass der Spreizbolzen eine Hülse mit einer konischen Innenfläche und einen Bolzen mit einer konischen Außenfläche aufweist. Konische Flächen an Innen und Außenfläche sind eine einfache und kostengünstige Lösung, um einen Spreizbolzen zu realisieren.

Dabei ist besonders vorteilhaft, wenn der Spreizbolzen axiale Schlitze aufweist, wodurch die Spreizfunktion durch Anziehen einer mit dem Spreizbolzen in Wirkzusammenhang stehenden Schraubverbindung einfach realisiert werden kann.

Eine weitere vorteilhafte Weiterbildung besteht darin, dass die Kupplungsflansche mehrere, über den Umfang verteilte Bohrungen aufweisen, welche gleichmäßig über den Umfang verteilt sind, wobei jede Bohrung einen Spreizbolzen aufnimmt. Durch mehrere, bevorzugt gleichmäßig über den Umfang verteilte, Spreizbolzen in den Bohrungen der Kupplungsflansche können höhere Kräfte und Drehmomente übertragen werden. Zusätzlich können fertigungsbedingte Abweichungen zwischen den einzelnen Bohrungen über die Spreizbolzen ein Stück weit ausgeglichen werden, indem die Spreizbolzen unterschiedlich stark oder in einer unterschiedlichen Reihenfolge, die heißt nicht im Uhrzeigersinn oder gegen den Uhrzeigersinn, sondern alternierend angezogen werden. Dies erspart eine teure, gemeinsame Bearbeitung, beispielsweise ein gemeinsames Honen der Bohrungen. Außerdem bleibt die Schaltkupplung somit einfach austauschbar, was die Kosten in der Revision und in der Instandhaltung reduziert.

Eine bevorzugte Anwendung für ein erfindungsgemäßes Kupplungselement zur Anbindung einer Schaltkupplung liegt in der beschriebenen Schaltkupplung von einer Dampfturbine mit einem Generator und einer Gasturbine in einem Kraftwerk.

Im Folgenden wird ein Ausführungsbeispiel der erfindungsgemäßen Kupplungsvorrichtung zur Anbindung der Schaltkupplung anhand der beigefügten Zeichnungen erläutert. Gleiche Bauteile oder Bauteile mit gleicher Funktion sind dabei mit gleichen Bezugszeichen gekennzeichnet.
Fig. 1 zeigt einen Turbinenstrang mit einer Schaltkupplung
Fig. 2 zeigt schematisch eine Schaltkupplung, welche über eine erfindungsgemäße Kupplungsvorrichtung mit den beidseitig angeordneten Kupplungsflanschen von Dampfturbinenwelle und Generatorwelle verbunden ist.
Fig. 3 zeigt ein Ausführungsbeispiel einer erfindungsgemäßen Kupplungsvorrichtung zur Anbindung einer Schaltkupplung an einen Turbinenstrang.

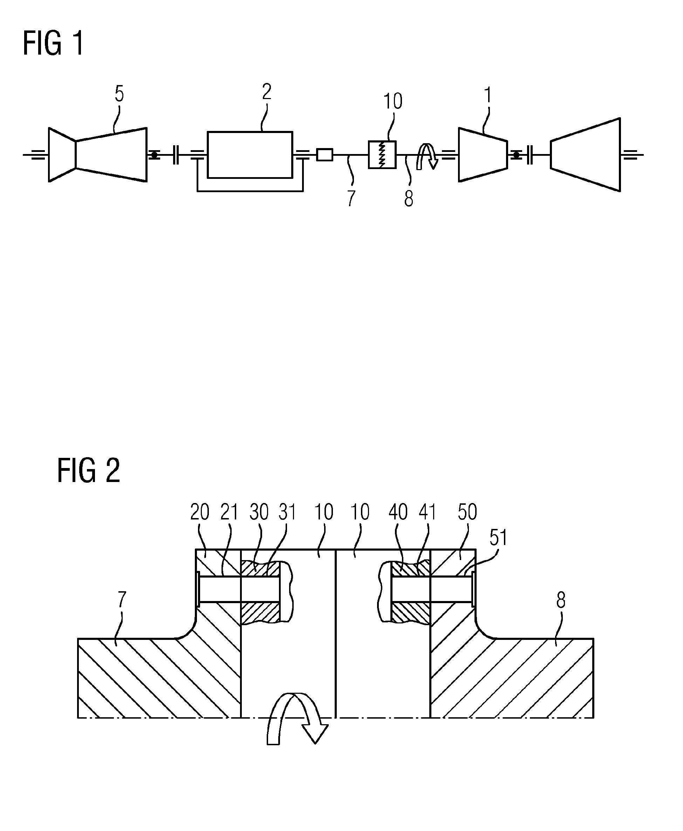

In Fig. 1 ist ein Turbinenstrang dargestellt. Der Turbinenstrang umfasst eine Dampfturbine 1, eine Gasturbine 5 und einen Generator 2, wobei der Generator 2 über eine Schaltkupplung 10 ebenfalls an die Dampfturbine 1 angekuppelt ist. Zur Ankupplung der Schaltturbine sind an einer Generatorwelle 7, welche die Schaltkupplung 10 mit dem Generator 2 verbindet, sowie an einer Turbinenwelle 8, welche die Schaltkupplung 10 mit einer Turbine 1,5, insbesondere der Dampfturbine 5 verbindet, Kupplungsflansche 20, 50 ausgebildet.

Fig. 2 zeigt eine erfindungsgemäße Kupplungsvorrichtung zur Anbindung eines Generators 2, bzw. einer Generatorwelle 7. Die Kupplungsvorrichtung umfasst einen ersten Kupplungsflansch 20, welcher an der Generatorwelle 7 ausgebildet ist und einen zweiten Kupplungflansch 50, welcher an der Turbinenwelle 8 ausgebildet ist. Die beiden Kupplungsflansche 20,50 weisen jeweils Durchgangsbohrungen 21,51 auf. Die Schaltkupplung 10 weist an beiden Enden jeweils einen internen Kupplungsflansch 30,40 auf. Die internen Kupplungsflansche 30,40 der Schaltkupplung 10 weisen jeweils Sacklockbohrungen 31,41 auf. Die Schaltkupplung 10 ist mit den Wellen 7,8 verbindbar, indem auf der einen Seite der Kupplungsflansch 20 der Generatorwelle 7 über Verbindungselemente 12, insbesondere mit Spreizbolzen 13, mit dem ersten internen Kupplungsflansch 30 der Schaltkupplung 10 verbunden wird, und indem die Turbinenwelle 8 über den Kupplungsflansch 50 mit Verbindungselementen 12, insbesondere mit Spreizbolzen 13, mit dem zweiten internen Kupplungsflansch 40 der Schaltkupplung 10 verbunden wird.

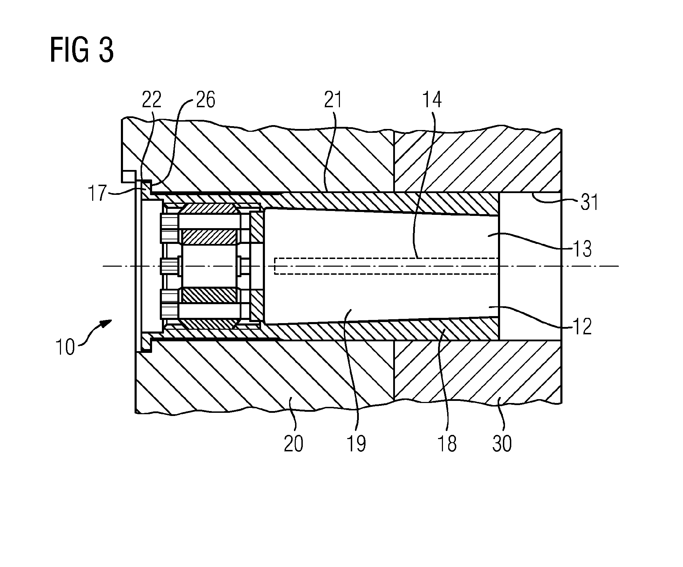

Fig. 3 zeigt eine Anbindung des Generators 2 über die Generatorwelle 7. An der Generatorwelle 7 ist der Kupplungsflansch 20 ausgebildet. Der Kupplungsflasch 20 ist mit dem internen Kupplungsflansch 30 an der Schaltkupplung 10 verbunden, wobei der erste Kupplungsflansch 20 eine Bohrung 21 aufweist, und der zweite Kupplungsflansch 30 eine Bohrung 31 aufweist. Die Bohrung 21 des ersten Kupplungsflansches 20 weist einen Absatz 22 auf, welcher als ein axialer Anschlag 26 für einen in die Bohrungen 21,31 eingesetztes Verbindungselement 12 dient. Das Verbindungselement 12 weist an seinem dem ersten Kupplungsflansch 20 zugewandten Ende einen Kragen 17 auf, welcher sich an dem Absatz 22 abstützt. Das Verbindungselement 12 ist als Spreizbolzen 13 ausgeführt. Dabei ist der Spreizbolzen 13 so dimensioniert, dass der Spreizbolzen 13 im entlasteten Zustand mit Spielpassung in die Bohrungen 21,31 an den Kupplungsflanschen 20,30 eingesetzt wird. Durch den Anschlag 26 und den Kragen 17 am Spreizbolzen 13 wird die axiale Position des Spreizbolzens 13 definiert, so dass eine sichere Positionierung des Spreizbolzens 13 zu den beiden Kupplungsflanschen 20,30 erreicht wird. Der Spreizbolzen 13 weist eine geschlitzte Hülse 18 auf, wobei ein Schlitz 14 in axialer Richtung der Hülse 18 des Spreizbolzens 13 ausgebildet ist. Durch Verspannen der Hülse 18 mit dem internen Konus 19 des Spreizbolzens 13 wird der Außendurchmesser des Spreizbolzens 13 vergrößert, so dass der Spreizbolzen 13 den ersten Kupplungsflansch 20 und den zweiten Kupplungsflansch 30 zueinander zentriert. Dabei entsteht eine formschlüssige und spielfreie Verbindung zwischen dem Spreizbolzen 13 und den beiden Kupplungsflanschen 20,30, so dass ein Drehmoment über die Schaltkupplung 10 übertragen und die Positionierung der Kupplungsflansche 20,30 zueinander reproduzierbar sichergestellt werden kann.

Um einen einfachen Austausch der Spreizbolzen 13 zu ermöglichen, reduziert sich der Außendurchmesser 13 beim Lösen des Konus 19 aus der Hülse 18 des Spreizbolzens 13 wieder auf das ursprüngliche Maß und der Spreizbolzen 13 kann somit leicht aus den Bohrungen 21,31 in den Kupplungsflanschen 20,30 gezogen werden.

Um größere Drehmomente zu übertragen, sind mehrere, vorzugsweise 4 bis 20, Bohrungen 21,31 über den Umfang der Kupplungsflansche 20,30 gleichmäßig verteilt. Dabei können unterschiedliche Toleranzlagen der Bohrungen 21,31 und der Spreizbolzen 13 durch unterschiedlich stark und in alternierenden Reihenfolge angezogene Spreizbolzen 13 ausgeglichen werden. Unter alternierender Reihenfolge ist in diesem Zusammenhang zu verstehen, dass die Spreizbolzen nicht der Reihe nach im Uhrzeigersinn oder gegen den Uhrzeigersinn angezogen werden, sondern zunächst ein erster Spreizbolzen 13, danach ein um ca. 180° versetzter zweiter Spreizbolzen 13 und dann ein weiterer Spreizbolzen 13, der nicht in unmittelbarer Nähe des ersten oder zweiten Spreizbolzens 13 angeordnet ist. Dabei ist es vorteilhaft, wenn die Spreizbolzen 13 zunächst locker eingesetzt werden und dann jeweils gegenüberliegende Spreizbolzen 13 angezogen werden, um eine möglichst gute und reproduzierbare Zentrierung der Kupplungsflansche 20,30 zueinander zu erreichen.
Obwohl die Erfindung im Detail durch die bevorzugten Ausführungsbeispiele näher beschrieben wurde, so ist die Erfindung nicht auf die offenbarten Ausführungsbeispiele beschränkt und andere Variationen können vom Fachmann hieraus abgeleitet werden, ohne den Schutzumfang der Erfindung zu verlassen.

## Patentansprüche

1. Kupplungsvorrichtung zur Anbindung einer Schaltkupplung (10) an einen Turbinenstrang, umfassend einen ersten Kupplungsflansch (20) und einen zweiten Kupplungsflansch (30), wobei der erste Kupplungsflansch (20) und der zweite Kupplungsflansch (30) je mindestens eine Bohrung (21,31) zur Aufnahme eines Verbindungselements (12) aufweisen,
**dadurch gekennzeichnet, dass**
der erste Kupplungsflansch (20) und der zweite Kupplungsflansch (30) über mindestens ein Verbindungselement (12) zueinander zentriert sind, welcher in die Bohrungen (21,31) im ersten und im zweiten Kupplungsflansch (20,30) eingesetzt ist.

2. Kupplungsvorrichtung zur Anbindung einer Schaltkupplung (10) nach Anspruch 1,
**dadurch gekennzeichnet, dass**
an dem ersten Kupplungsflansch (20) oder an dem zweiten Kupplungsflansch (30), insbesondere in den Bohrungen (21,31), ein axialer Anschlag (26) zur Positionierung des Verbindungselements (12) ausgebildet ist.

3. Kupplungsvorrichtung zur Anbindung einer Schaltkupplung (10) nach Anspruch 1 oder 2,
**dadurch gekennzeichnet, dass**
das Verbindungselement (12) als Spreizbolzen (13) ausgeführt ist.

4. Kupplungsvorrichtung zur Anbindung einer Schaltkupplung (10) nach Anspruch 3,
**dadurch gekennzeichnet, dass**
der Spreizbolzen (13) eine Hülse (18) mit einer konischen Innenfläche und einen Bolzen (19) mit einer konischen Außenfläche aufweist.

5. Kupplungsvorrichtung zur Anbindung einer Schaltkupplung (10) nach Anspruch 4,
**dadurch gekennzeichnet, dass**
die Hülse (18) des Spreizbolzens (13) einen oder mehrere Schlitze (14) aufweist.

6. Kupplungsvorrichtung zur Anbindung einer Schaltkupplung (10) nach Anspruch 5,
**dadurch gekennzeichnet, dass**
die Schlitze (14) in axialer Richtung der Hülse (18) ausgebildet sind.

7. Kupplungsvorrichtung zur Anbindung einer Schaltkupplung (10) nach einem der Ansprüche 1 bis 6,
**dadurch gekennzeichnet, dass**
die Kupplungsflansche (20,30) mehrere, bevorzugt 4 bis 20, Bohrungen (21,31) aufweisen, welche gleichmäßig über den Umfang der Kupplungsflansche (20,30) verteilt sind.

8. Kupplungsvorrichtung zur Anbindung einer Schaltkupplung (10) nach einem der Ansprüche 1 bis 7,
**dadurch gekennzeichnet, dass**
die Bohrungen (21,31) getrennt voneinander bearbeitet sind.

9. Turbinenstrang mit einer Turbine (1) und einem Generator (2), wobei der Generator (2) über eine Schaltkupplung (10) zumindest mittelbar an die Turbine (1) ankuppelbar ist,
**dadurch gekennzeichnet, dass**
die Ankuppelung über eine Schaltkupplung (10) erfolgt, wobei die Schaltkupplung (10) mit einer Kupplungsvorrichtung gemäß einem der Ansprüche 1 bis 8 mit einer Welle erfolgt.

10. Verfahren zur Ankupplung eines Generators (2) an eine Turbine (1), wobei der Generator (2) über eine Schaltkupplung (10) mit der Turbine (1) verbunden wird, indem ein erster, generatorseitiger Kupplungsflansch (20) und ein zweiter, turbinenseitiger Kupplungsflansch (50) jeweils mit einem internen Kupplungsflanschen (30,40) der Schaltkupplung (10) verbunden sind und dabei je mindestens eine Bohrung (21,31) zur Aufnahme eines Verbindungselements (12) aufweisen,
**dadurch gekennzeichnet, dass**
der erste, generatorseitige Kupplungsflansch (20) und der zweite, turbinenseitige Kupplungsflansch (50) über jeweils mindestens einen Verbindungselement (12) zu den internen Kupplungsflanschen (30,40) der Schaltkupplung (10) zentriert werden, welche in den Bohrungen (21,31,41,51) in den Kupplungsflanschen (20,30,40,50) positioniert werden.

11. Verfahren nach Anspruch 10,
**dadurch gekennzeichnet, dass**
eine Momentenübertragung zwischen dem ersten, generatorseitigen Kupplungsflansch (20) und dem ersten Kupplungsflansch (30) der Schaltkupplung sowie zwischen und dem zweiten, turbinenseitigen Kupplungsflansch (50) und dem zweiten Kupplungsflansch (40) der Schaltkupplung (10) per spielfreiem Formschluss erfolgt, indem mindestens ein Verbindungselement (12) als Spreizbolzen (13) ausgebildet ist, wobei der Spreizbolzen (13) derart in den Bohrungen (21,31,41,51) der Kupplungsflansche (20,30,40,51) verspannt wird, dass ein spielfreier Formschluss zwischen Spreizbolzen (13) und jeweils zwei Kupplungsflanschen (20,30,40,50) realisiert wird.
